# EUROPÄISCHE PATENTSCHRIFT

(11) **EP 3 959 492 B1**
(45) Veröffentlichungstag und Bekanntmachung des Hinweises auf die Patenterteilung: **14.02.2024**
(21) Anmeldenummer: 20720819.0
(22) Anmeldetag: 22.04.2020
(51) Int. Cl.: G01K 1/20, G01W 1/02

(54) **VERFAHREN, ANORDNUNG UND DIE VERWENDUNG DER ANORDNUNG UM METEOROLOGISCHE TEMPERATURMESSUNGEN BEZÜGLICH DES EINFLUSSES DER SONNEN- UND WÄRMESTRAHLUNG ZU KORRIGIEREN**
METHOD, ASSEMBLY AND USE OF THE ASSEMBLY FOR CORRECTING METEOROLOGICAL TEMPERATURE MEASUREMENTS IN RESPECT OF THE INFLUENCE OF SOLAR AND THERMAL RADIATION
PROCÉDÉ, DISPOSITIF ET UTILISATION D'UN DISPOSITIF POUR CORRIGER DES MESURES DE TEMPÉRATURES MÉTÉOROLOGIQUES RELATIVES À L'INFLUENCE DU RAYONNEMENT SOLAIRE ET THERMIQUE

(30) Priorität: 24.04.2019 DE 102019110610
(43) Veröffentlichungstag der Anmeldung: 02.03.2022
(73) Patentinhaber: Technische Universität Ilmenau, 98693 Ilmenau (DE)
(72) Erfinder: FRÖHLICH, Thomas, 98693 Ilmenau (DE); PÄTZ, Joachim, 18147 Rostock (DE)
(74) Vertreter: Kailuweit & Uhlemann Patentanwälte Partnerschaft mbB
(86) Internationale Anmeldenummer: PCT/EP2020/061138
(87) Internationale Veröffentlichungsnummer: WO 2020/216759

(56) Entgegenhaltungen:
- US-A1- 2009 041 084
- US-A1- 2013 329 764

## Beschreibung

Die Erfindung betrifft ein Verfahren, eine Anordnung sowie die Verwendung einer solchen Anordnung, sowie die Verwendung eines Datenträgers, auf dem ein Computerprogrammprodukt zur Anwendung des erfindungsgemäßen Verfahrens gespeichert ist, um den Einfluss der Sonnen- und Wärmestrahlung auf den Messwert meteorologischer Temperaturmessungen zu berücksichtigen und somit den Messwert der Temperatur zu korrigieren.

Zur Erhebung meteorologischer Daten werden an die Messsysteme besondere Anforderungen gestellt, da sich die dazu verwendeten Messsysteme zumeist im Freien befinden und somit den jeweils aktuellen Witterungsbedingungen ausgesetzt sind. Daraus ergeben sich nur aufwendig zu vermeidende Störeinflüsse auf die meteorologischen Messgrößen, wie z. B. Temperatur, Luftfeuchtigkeit und Windgeschwindigkeit.

Um beispielsweise den Temperaturanstieg, u. a. zum Zwecke des Nachweises der Klimaerwärmung, über einen längeren Zeitabschnitt aufzeichnen zu können, werden Messsysteme eingesetzt, bei welchen die störenden Einflüsse von direkter Sonneneinstrahlung und/oder Wärmestau durch eine unzureichende Belüftung seitens der Konstruktion minimiert werden.

So beschreibt z. B. die DE 10 2013 015 773 B4 eine Einhausung für im Freien aufgestellte Klimamessgeräte, mit einer zentralen Aufnahme für wenigstens eine Sensoranordnung und einer die Aufnahme außen umgebenden Wetter- und Strahlenschutzanordnung.

Daneben offenbart die DE 699 07 033 T2 einen Sensor für die Erfassung von Temperatur und/oder Feuchtigkeit der Umgebungsluft. Dabei werden der Sensor bzw. die Sensorvorrichtung in zylindrischer und koaxialer Anordnung ausgeführt. Diese geometrische Ausführung begünstigt einen Kamineffekt und sorgt somit für einen steten Luftstrom. Zusätzlich wird durch die Wahl geeigneter Materialien der Strahlungstransport der Wärme ins Innere der Messeinrichtung minimiert.

Mit der in der DE 10 2006 010 946 B3 vorgeschlagenen Lösung wird die Verbesserung der Temperarturmessung bei Starkwind ermöglicht. Das Gehäuse eines durch Ventilatoren zwangsbelüfteten Temperaturmessgerätes wird um die Anordnung von planparallelen Platten ergänzt. Diese Platten erzielen im Zusammenspiel mit Starkwind eine Sogwirkung.

Dadurch wird eine Durchlüftung des Messgerätes bewirkt und die durch die Ventilatoren erzeugte Abwärme abgeführt, welche andernfalls durch die ungünstigen Druckverhältnisse, hervorgerufen durch den Starkwind, im Gehäuse verbleiben würde.

Die DE 28 33 673 A1 offenbart eine Instrumentensäule zur Aufnahme meteorologischer Messinstrumente mit im Säuleninnenraum eingebautem Ventilator, durch den ein ständiger Luftstrom in einem aus strahlungsdurchlässigem und wärmeisolierendem Material bestehenden Kamin aufrechterhalten wird.

Außerdem wird in der US 2,900,821 eine Instrumentensäule zur Einhausung meteorologischer Messinstrumente offenbart, welche für die Montage von Ventilatoren zur aktiven Belüftung des Inneren der Einhausung vorgesehen ist. Die Einhausung selbst ist derart geformt, dass die auftreffende Sonnenstrahlung von der Messeinrichtung der Temperatur abgeschattet wird. Zusätzlich ist konstruktiv ein erneutes Zuführen der Abluft in den Innenraum als Fehlerquelle ausgeschlossen. Des Weiteren sorgt der Abluftstrom für den Abtransport des Wärmeeintrags eventuell eingesetzter elektrischer Verbraucher. Somit ist eine Verminderung der Störeinflüsse durch zusätzliche Wärmequellen gewährleistet.

Bei diesen aus dem Stand der Technik bekannten Einhausungen wird jedoch der Einfluss der Sonnen- und Wärmeeinstrahlung bei der Temperaturmessung nicht in ausreichendem Maße berücksichtigt, da es in jedem Falle zu einer strahlungsverursachten Erwärmung der Einhausung selbst kommt. Die Weiterleitung der strahlungsinduzierten Wärme zum im Inneren der Einhausung befindlichen Messsystem zur Temperaturmessung ist aufgrund der physikalischen Realität unvermeidlich und bildet somit immer auch einen Störeinfluss auf den Messwert der Temperatur. Somit ist eine vollständige Korrektur der Strahlungseinflüsse bislang nicht möglich.

Daneben ist aus der US 2013 / 0 329 764 A1 eine Vorrichtung bekannt, bei der mindestens eine beweglich gelagerte Strahlenschutzblende direkt in Sonneneinstrahlungsrichtung den Temperatursensor ganz oder teilweise abschattet, wobei hier allerdings die Sonneneinstrahlungsrichtung bekannt sein muss, um automatisch verfolgt werden zu können.

Schließlich wird mit der US 5,826,980 A ein kontaktloses Strahlungsthermometer mit einer beweglichen zylindrischen Blende zur zeitweisen Abschattung des Sensorelements vorgestellt. Hierbei handelt es sich nicht um ein berührendes Thermometer, weil das Sensorelement mit dem Messobjekt nicht in Berührung ist. Vielmehr sollen entfernte großflächige Objektoberflächentemperaturen von Festkörpern mithilfe der einfallenden Infrarot-Strahlung messtechnisch erfasst werden. Die bewegliche Blende zur zeitweisen Abschattung dient zum scannende Abtasten der Objektoberfläche, um eine Mehrzahl von Messpunkten auf dieser Oberfläche erfassen und untereinander vergleichen zu können.

Die Aufgabe der Erfindung ist es daher, ein Verfahren, eine Anordnung sowie die Verwendung einer solchen Anordnung, sowie die Verwendung eines Datenträgers, auf dem ein Computerprogrammprodukt gespeichert ist, das Befehle umfasst, die bewirken, dass die erfindungsgemäße Vorrichtung die erfindungsgemäßen Verfahrensschritte ausführt, zur Ausführung des erfindungsgemäßen Verfahrens zur Verfügung zu stellen, um den Einfluss der Sonnen- und Wärmestrahlung auf den Messwert der Temperatur zu korrigieren.

Die Aufgabe wird gelöst durch die Merkmale der unabhängigen Ansprüche. Bevorzugte Ausführungsformen sind Gegenstand der jeweils darauf rückbezogenen Unteransprüche. Die Anordnung weist mindestens ein Messsystem zur Temperaturmessung auf. Dazu ist mindestens eine bewegliche Strahlenschutzblende angeordnet, wobei die beweglich angeordnete Strahlenschutzblende dazu ausgebildet ist, das Messsystem ganz oder teilweise abzuschatten.

Unter meteorologischen Messinstrumenten werden Messgeräte verstanden, die vornehmlich im Freien aufgestellt werden und die aktuelle Qualität wetterbeeinflussender Größen, wie z. B. Luftdruck, Umgebungstemperatur und/oder Luftfeuchte messen und ggf. aufzeichnen. Dabei ist auch der Strahlungseintrag eine dieser Größen.

Als Strahlungseintrag wird das Übertragen der Leistung einer gegebenen Strahlung in eine Zielregion verstanden. Dieser Strahlungseintrag wird in dieser Schrift insbesondere durch Sonnen- und Wärmestrahlung erzielt. Prinzipiell beschränkt sich dieser Effekt aber nicht auf Sonnen- und Wärmestrahlung, sondern kann über das gesamte elektromagnetische Spektrum erweitert werden. Selbst ionisierende Strahlenqualitäten, z. B. α-und β-Strahlung, koppeln Leistung in eine Zielregion und können durch eine geeignete Wahl von Materialien abgeschattet werden.

Eine Strahlenschutzblende ist im allgemeinen Fall ein Bauteil oder eine Baugruppe, welche zwischen Strahlungsquelle und der von der Strahlung abzuschattenden Region eingebracht wird.

Das Maß der Abschaltung wird dabei als das Verhindern eines Teils der Strahlung am Erreichen der Zielregion verstanden. Dieses Maß kann einerseits aus einer absoluten Messung, beispielsweise durch eine Analyse der in der Zielregion ankommenden Strahlenqualität, ermittelt werden. Andererseits und vereinfachend kann dieses Maß bei bekanntem Abschattungsvermögen der Strahlenschutzblende durch eine relative Angabe im Bereich von 0 %, die gesamte Strahlung trifft die Zielregion, bis 100 %, keine Strahlung trifft die Zielregion, angegeben werden.

Aus der zeitlichen Änderung dieses relativen Bereichs ergibt sich an einem Ort ein zugehöriger Schattengang. Es wird somit das zeitlich veränderliche Maß der Abschattung verstanden. Der Strahlungseintrag ist folglich ebenfalls zeitlich veränderlich.

Die Anordnung mit mindestens einem Messsystem zur Temperaturmessung weist mindestens eine beweglich angeordnete Strahlenschutzblende auf. Die verwendete Strahlenschutzblende ist derart ausgebildet, dass diese das Messsystem ganz oder teilweise abzuschatten vermag. Zur Vereinfachung und im Hinblick auf einen vorteilhaft automatisiert ausgeführten Betrieb von meteorologischen Messsystemen wird die Bewegung der Strahlenschutzblende mittels einer Antriebsvorrichtung in Gestalt eines Motors bewegt. Dieser Motor ist bevorzugt ein Elektromotor, da dieser im Verglich zu einem leistungsäquivalenten Verbrennungsmotor weniger Abwärme produziert. Auch entfallen heiße Verbrennungsabgase, welche sich ggf. ungünstig auf die zu korrigierende Temperatur auswirkt.

Ein Elektromotor bietet den weiteren Vorteil, dass sich bei der Verwendung in seiner Ausführung als Schrittmotor, das Umlaufverhalten besonders einfach steuern lässt. Damit lassen sich die verschiedenen Zustände der Abschattung in ihren Zeitdauern anpassen. Das führt dazu, dass die Trägheit des verwendeten Messsystems berücksichtigt werden kann. Dabei bedeutet "Trägheit des verwendeten Messsystems", dass eine gewisse Zeit benötigt wird, bis sich nach Änderung des Bestrahlungszustandes schließlich keine Änderungen in den Messwerten mehr bewirken und stabile Messwerte erreicht sind.

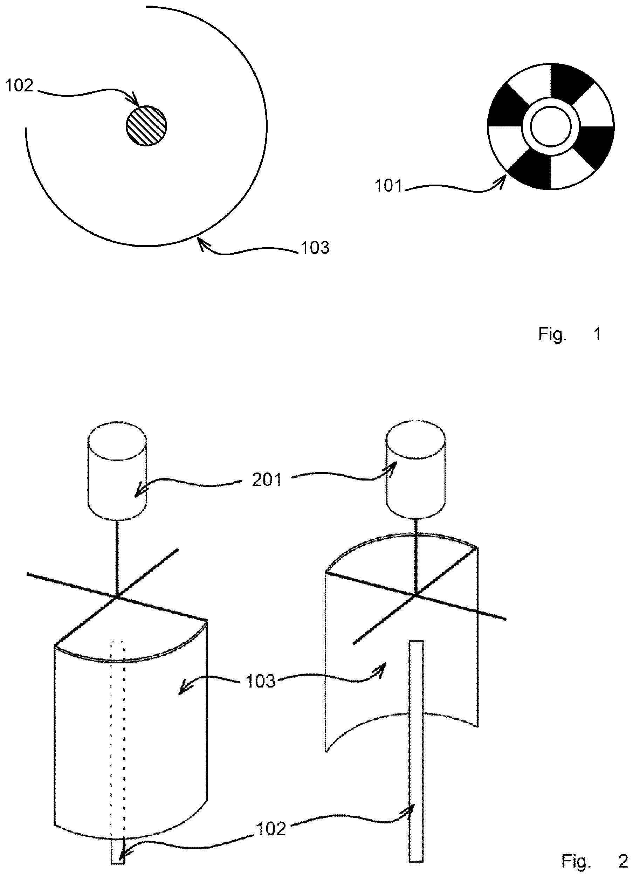

Zur vorteilhaften Erzeugung stabiler Messwerte der Temperatur, ist dies bei der Wahl der Dauer der Abschattung sowie auch bei der Wahl der Bewegungsart der Strahlenschutzblenden zu berücksichtigen. Neben beispielsweise einer Pendelbewegung ist eine weitere Art der periodischen Bewegung der Strahlenschutzblende das Umlaufen der verwendeten Messsysteme. Die umlaufende Bewegung ist im einfachsten Fall eine Rotation um die Messsysteme, wobei die Messsysteme in räumlicher Nähe oder auf der Rotationsachse dieser Bewegung platziert werden (Figur 1). Dies ermöglicht vorteilhaft zusätzlich die Verwendung von Getrieben, um die Bewegung des Motors an die Strahlenschutzblende zu vermitteln und damit eine bessere Anpassung der Drehzahlen von Motoren und Strahlenschutzblende zu ermöglichen.

Weiterhin sind auch verschiedene Ausführungsformen der Strahlenschutzblende verwendbar.

Vorteilhaft ist ein segmentierter Aufbau der Strahlenschutzblende (Figur 2). Somit können vorteilhaft mehr als zwei Bestrahlungszustände realisiert werden. Insbesondere wenn die einzelnen Segmente der Strahlenschutzblende unterschiedliches Vermögen aufweisen, um Licht hindurch zu lassen. Dies kann beispielsweise durch die Verwendung von unterschiedlichen Einzelsegmenten mit verschiedener Strahlendurchlässigkeit erfolgen, wobei vorteilhaft die Anordnung der einzelnen Segmente variiert werden kann. Die Einzelsegmente können vorteilhaft derart an der Antriebsvorrichtung angebracht werden, dass seitens der Antriebsvorrichtung und der Stellung der Einzelsegmente zueinander verschiedene Abschattungen realisiert werden können.

Zudem sind auch verschiedene Geometrien der einzelnen Segmente möglich und es werden jene bevorzugt, welche die auftreffende Strahlung in einer dem Messprozess dienlichen Art und Weise lenken, beispielsweise ein Zylindermantelsegment, wobei die konvexe Wölbung in Richtung der meteorologischen Messsysteme zeigt, um im Bestrahlungsfall eine rückseitige Fokussierung der einfallenden Strahlung zu verhindern.

Neben den Einzelsegmenten ist, zur vorteilhaften Verringerung des konstruktiven Aufwandes zur Befestigung, eine einteilig geformte Blende mit eingebrachten Segmenten unterschiedlicher Strahlendurchlässigkeit gleichsam zu betrachten. Dies hat zur Folge, dass die Segmente unterschiedlicher Lichtdurchlässigkeit der Strahlenschutzblende die auftreffende Strahlung unterschiedlich stark abschatten. Um das Maß der Abschattung richtig abschätzen zu können weist vorteilhaft die ggf. segmentierte Strahlenschutzblende ein Messsystem zu ihrer Positionsbestimmung auf. Bevorzugt weist mindestens ein verwendetes Einzelsegment ein Messsystem zur Positionsbestimmung auf. Dies dient einer weiteren Verbesserung der Abschätzung des Bestrahlungszustandes. Damit kann aus der gemessenen Temperaturänderung auf die eingekoppelte Strahlungsleistung rückgeschlossen werden. Weiterhin kann hieraus auch auf die räumliche Richtung des Eintreffens der Strahlung geschlossen werden.

Eine vorteilhafte Verwendung der Anordnung, welche ein Messsystem zur Strahlungsmessung aufweist, begründet sich durch die höhere Verlässlichkeit, insbesondere dann, wenn die Abschattung von Messsystem zur Temperaturmessung und Messsystem zur Strahlungsmessung in ähnlicher Art und Weise, sprich korreliert, durchgeführt werden. Die Korrelation aus gemessenem Strahlungseintrag und gemessener Temperaturänderung liefert direkt die Möglichkeit der Extrapolation auf einen beliebigen Strahlungseintrag.

Zur Automatisierung und Optimierung der meteorologischen Messungen werden die gemessenen Daten zum Zwecke der Aufzeichnung und Auswertung (Korrelation) von einer Datenverarbeitungsanlage verarbeitet und gespeichert.

Die Anordnung und insbesondere mindestens das Messsystem zur Temperaturmessung sollten sich bevorzugt in einer Einhausung für meteorologische Messinstrumente befinden. Dies ist vorteilhaft, da sich die Korrektur der gemessenen Temperatur mathematisch vereinfacht, da in einem solchen Falle eine lineare Extrapolation realisiert werden kann.

Das Verfahren zur Strahlungskorrektur von meteorologischen Temperaturmessungen erfolgt mit den Schritten:
a. Messung der Temperatur bei maximaler Einwirkung der Strahlung auf das Messsystem zur Temperaturmessung über einen vordefinierten Zeitraum,
b. Ändern der Einwirkung der Strahlung auf das Messsystem zur Temperaturmessung durch Abschattung unter Berücksichtigung der Trägheit des Messsystems zur Temperaturmessung,
c. Messung der Temperatur bei minimierter Einwirkung der Strahlung auf das Messsystem zur Temperaturmessung über einen vordefinierten Zeitraum,
d. Korrelieren von Temperaturänderung und Maß der Abschattung und
e. Extrapolation der gemessenen Temperatur auf ein strahlungsfreies Niveau.

Dabei soll unter "Extrapolation" das gedankliche Weiterführen gemessener Punkte in einem Datensatz verstanden werden.

Durch die Änderung des Strahlungseintrages durch unterschiedliche Abschattung des Messsystems zur Temperaturmessung stellt sich je nach Maß der Abschattung und dem Verstreichen einer gewissen Zeit zur Berücksichtigung von Trägheitseffekten, eine mit dem aktuellen Strahlungseintrag korrelierte Temperaturänderung ein.

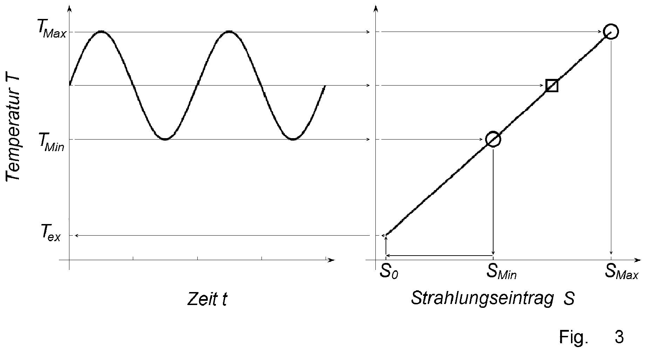

Bevorzugt werden die Extremwerte der durch verschiedene Blendenpositionen erzwungenen Temperaturänderungen mit der jeweils vorherrschenden Strahlung verglichen (Figur 3). Aus dem funktionellen Zusammenhang aus Strahlenwirkung und Temperaturänderung kann unter Verwendung eines bevorzugt einfachen Modells der linearen Regression eine Extrapolation zu den Werten der Temperatur völlig ohne Strahlenwirkung vorgenommen werden. Wobei die hier verwendete lineare Regression eine mathematische Methode darstellt, mit der eine gegebene Punktwolke in einen linearen Zusammenhang der Form (*T_{Ex}* = *T*(*S*) - *S* * Δ*T*/Δ*S*) überführt wird, wobei *T*(*S*) die einem Bestrahlungszustand zugeordnet gemessene Temperatur, *S* den Bestrahlungszustand, *ΔT* die Temperaturänderung, *ΔS* die Änderung des Bestrahlungszustandes und *T_{EX}* die extrapolierte und strahlungskorrigierte Temperatur symbolisieren.

Dieser gewählte Zusammenhang berücksichtigt vorteilhaft die in der meteorologischen Beobachtung manchmal anzutreffenden Situationen, dass bei sehr klarem Nachthimmel eine Wärmeabstrahlung mit einem vom Lufttemperatursensor weg gerichtetem Wärmestrom auftritt.

Die Verwendung einer Anordnung nach Anspruch 7 zur Durchführung des Verfahrens nach Anspruch 1 wird durch die Verwendung eines Datenträgers, auf dem ein Computerprogrammprodukt zur Anwendung des Verfahrens nach Anspruch 1 gespeichert ist, vorteilhaft verbessert Weiterhin kann auf dem Datenträger auch ein Computerprogrammprodukt zur autonomen Datenaufnahme gespeichert sein.

Ausführungsbeispiele der vorliegenden Erfindung werden in den folgenden Figuren angegeben.

In der Abbildung Figur 1 wird schematisch eine minimale Anordnung gezeigt. In diesem Ausführungsbeispiel sind die meteorologischen Messsysteme (102), insbesondere das Messsystem zur Temperaturmessung auf der Rotationsachse eine Zylindermantelfläche angeordnet. Die umlaufende und nicht geschlossene Zylindermantelfläche stellt dabei die Strahlenschutzblende (103) dar. Die Strahlenschutzblende (103) ist hier zu 75 % geschlossen dargestellt. In dieser Darstellung werden die meteorologischen Messsysteme (102) vom Strahleneintrag von der Strahlenquelle (101) abgeschattet.

In der Abbildung Figur 2 ist schematisch ein motorisiertes Ausführungsbeispiel offenbart.

Dabei ist die Strahlenschutzblende (103) an einem Antrieb in Form eines Motors ggf. mit Getriebe (201) angebracht. Auf diese Weise kann ein periodisches Umlaufen der Strahlenschutzblende (103) um die meteorologischen Messsysteme (102), insbesondere um das Messsystem zur Temperaturmessung, erzeugt werden.

In einem konkreten Ausführungsbeispiel zur Lufttemperaturmessung wird eine zylindrische Halterung mit integriertem elektrischen Temperaturfühler, z. B. ein PT100 Widerstandsthermometer, als meteorologisches Messinstrument (102) vertikal an einem Gestell befestigt. Dabei zeigt die sensitive Region des Temperatursensors in Richtung der Antriebsvorrichtung (nach oben). Entgegengerichtet (nach unten) sind die elektrischen Verbindungen für das PT100 Widerstandsthermometer, kontaktiert in Vierleiter- oder Vierpunktschaltung, aus der Halteeinrichtung herausgeführt. Für die mechanische Führung wird ein 5 mm im Durchmesser messender und 40 mm langer Kabelfühler verwendet. Dieser ist mit einem wasserdicht verpressten Silikonanschlusskabel bis zur Messwerterfassungs- und Steuerungseinheit ausgestattet.

Oberhalb entlang der Symmetrieachse des zylindrischen Messsystems (102) ist an einem Gestell als Antriebsvorrichtung (201) ein Schrittmotor montiert. An der Antriebsachse des Schrittmotors wird direkt ein Haltekreuz mittels einer starren Kupplung befestigt. Das Haltekreuz ist aus vier radialen Streben von jeweils 100 mm Länge aufgebaut. Die Streben selbst sind beispielsweise aus schlecht wärmeleitendem Kunststoff gefertigt. An zwei Streben des Haltekreuzes wird eine Strahlenschutzblende (103) in Viertelzylinderform hängend befestigt. Die Strahlenschutzblende (103) mit dem Biegeradius von 100 mm besteht aus poliertem Edelstahlblech von 2 mm Dicke. Dabei ist die dem Temperaturfühler zugewandte Seite des Strahlungsschildes zur Reduktion des Reflexionsvermögens lackiert oder sandgestrahlt. Damit die per Haltekreuz am Motor befestigte Last während der Bewegung keine Unwucht aufweist, werden an den jeweils gegenüberliegenden freien Streben des Haltekreuzes Trimmgewichte befestigt.

Die Energieversorgung und Steuerung sowohl des Messsystems (102), als auch des Schrittmotors wird mittels elektrischer Leitungen gewährleistet, welche zur zentralen Messwerterfassungs- und Steuerungseinheit verlegt sind.

Der Motor bewegt das Haltekreuz auf verschiedene, von der Steuerungseinheit vorgegebene Drehwinkelstellungen. Die dazu benötigten Winkelgeschwindigkeiten und -beschleunigungen werden dabei durch die Steuerungseinheit vorgegeben.

In der Abbildung Figur 3 wird schematisch das Verfahren zur Temperaturkorrektur dargestellt. In diesem Ausführungsbeispiel wird das Messsystem zur Temperaturmessung periodisch von der Strahlenquelle abgeschattet. Somit stellen sich zu bestimmten Zeiten ein Maximum der Temperatur (*T_{Max}*) und ein Minimum der Temperatur (*T_{Min}*) ein. Diese Extrema der Temperatur werden mit dem Strahlungseintrag, beispielsweise über die Position der Strahlenschutzblende, korreliert (*S_{Max}* und *S_{Min}*)*.* Mittels einer linearen Regression der Messwerte kann somit zu den Temperaturwerten ohne Strahlungseintrag (*T_{Ex}; S₀*) extrapoliert werden.

### Bezugszeichenliste

- 101 -: Strahlenquelle (z. B. Sonne)
- 102 -: meteorologische Messsysteme (Strahlung / Temperatur)
- 103 -: Strahlenschutzblende
- 201 -: Antriebsvorrichtung

## Patentansprüche

1. Verfahren zur Strahlungskorrektur von meteorologischen Temperaturmessungen mit mindestens einem Messsystem (102) zur Temperaturmessung und mindestens einer beweglich gelagerten Strahlenschutzblende (103) umfassend folgende Schritte:
a. Messung der Temperatur bei maximaler Einwirkung der Strahlung auf das Messsystem (102) zur Temperaturmessung über einen vordefinierten Zeitraum,
b. Ändern der Einwirkung der Strahlung auf das Messsystem (102) zur Temperaturmessung durch Abschattung unter Berücksichtigung der Trägheit des Messsystems (102) zur Temperaturmessung,
c. Messung der Temperatur bei minimierter Einwirkung der Strahlung auf das Messsystem (102) zur Temperaturmessung über einen vordefinierten Zeitraum
d. Korrelieren von Temperaturänderung und Maß der Abschattung und
e. Extrapolation der gemessenen Temperatur auf ein strahlungsfreies Niveau.

2. Verfahren nach Anspruch 1, **dadurch gekennzeichnet, dass** die Änderung der Einwirkung der Strahlung auf das Messsystem (102) zur Temperaturmessung durch eine periodische, zumindest teilweise Abschattung des Messsystems (102) zur Temperaturmessung mittels der Strahlenschutzblende (103) realisiert wird.

3. Verfahren nach einem der vorhergehenden Ansprüche, **dadurch gekennzeichnet, dass** die beweglich gelagerte Strahlenschutzblende (103) mittels einer Antriebsvorrichtung (201) periodisch bewegt wird.

4. Verfahren nach Anspruch 3, **dadurch gekennzeichnet, dass** die periodische Bewegung der Strahlenschutzblende (103) eine Pendelbewegung oder eine Rotation um die Messsysteme (102) ist, wobei die Messsysteme (102) in räumlicher Nähe oder auf der Rotationsachse dieser Bewegung platziert werden.

5. Verfahren nach einem der vorhergehenden Ansprüche mit einem in einer Einhausung für meteorologische Messinstrumente positionierten Messsystem (102), **dadurch gekennzeichnet, dass** die gemessene Temperatur auf ein strahlungsfreies Niveau linear extrapoliert wird.

6. Verfahren nach einem der vorhergehenden Ansprüche, **dadurch gekennzeichnet, dass** die Aufzeichnung der Messdaten und die Extrapolation der Temperaturmesswerte auf ein strahlungsloses Niveau mittels einer Datenverarbeitungsanlage erfolgen.

7. Anordnung zur Durchführung eines Verfahrens nach einem der Ansprüche 1 bis 6, aufweisend mindestens ein Messsystem (102) zur Temperaturmessung mit einer beweglich angeordneten Strahlenschutzblende (103), wobei die beweglich angeordnete Strahlenschutzblende (103) dazu ausgebildet ist, das Messsystem (102) ganz oder teilweise abzuschatten,
weiterhin aufweisend eine Antriebsvorrichtung (201), die ausgebildet ist, die Strahlenschutzblende (103) zu bewegen, wobei die Antriebsvorrichtung (201) ein Motor ist, und eine Datenverarbeitungsanlage, die eingerichtet ist, Messdaten des Messsystems (102) aufzuzeichnen und eine Extrapolation von Temperaturmesswerten auf ein strahlungsloses Niveau durchzuführen.

8. Anordnung nach Anspruch 7, **dadurch gekennzeichnet, dass** die Antriebsvorrichtung (201) ein Elektromotor ist.

9. Anordnung nach einem der Ansprüche 7 und 8, **dadurch gekennzeichnet, dass** die Antriebsvorrichtung (201) ein Schrittmotor ist.

10. Anordnung nach Anspruch 7, **dadurch gekennzeichnet, dass** die Antriebsvorrichtung ein Motor mit Getriebe ist und eine periodische Bewegung der Strahlenschutzblende (103) um die Messsysteme (102) bewirkt.

11. Anordnung nach Anspruch 7 bis 10, **dadurch gekennzeichnet, dass** die Strahlenschutzblende (103) segmentiert aufgebaut ist, wobei die segmentierten Bereiche der Strahlenschutzblende (103) eine unterschiedliche Durchlässigkeit für die auftreffende Strahlung aufweisen.

12. Anordnung nach einem der Ansprüche 7 bis 11, **dadurch gekennzeichnet, dass** die Strahlenschutzblende (103) ein Messsystem zu ihrer Positionsbestimmung aufweist.

13. Anordnung nach Anspruch 7, **dadurch gekennzeichnet, dass** die Anordnung ein Messsystem (102) zur Strahlungsmessung aufweist und die Anordnung ausgebildet ist, das Messsystem (102) zur Strahlungsmessung und das Messsystem (102) zur Temperaturmessung korreliert periodisch abzuschatten.

14. Verwendung einer Anordnung nach Anspruch 7 zur Durchführung des Verfahrens nach Anspruch 1.

15. Verwendung eines Datenträgers, auf dem ein Computerprogrammprodukt gespeichert ist, das Befehle umfasst, die bewirken, dass die Vorrichtung des Anspruchs 7 die Verfahrensschritte nach Anspruch 1 ausführt, zur Ausführung des Verfahrens nach Anspruch 1.

## Claims

1. Method for correcting the radiation of meteorological temperature measurements using at least one measuring system (102) for temperature measurement and at least one movably mounted radiation protection screen (103) comprising the following steps:
a. measuring the temperature in the case of maximum influence of the radiation on the measuring system (102) for temperature measurement over a predefined period of time,
b. changing the influence of the radiation on the measuring system (102) for temperature measurement by shading, taking into account the inertia of the measuring system (102) for temperature measurement,
c. measuring the temperature in the case of minimized influence of the radiation on the measuring system (102) for temperature measurement over a predefined period of time
d. correlating the temperature change and the degree of shading, and
e. extrapolating the measured temperature to a radiation-free level.

2. Method according to claim 1, **characterized in that** the change in the influence of the radiation on the measuring system (102) for temperature measurement by a periodic, at least partial shading of the measuring system (102) for temperature measurement is achieved by means of the radiation protection screen (103).

3. Method according to either of the preceding claims, **characterized in that** the movably mounted radiation protection screen (103) is periodically moved by means of a drive device (201).

4. Method according to claim 3, **characterized in that** the periodic movement of the radiation protection screen (103) is a pendulum movement or a rotation about the measuring systems (102), the measuring systems (102) being placed in spatial proximity or on the axis of rotation of this movement.

5. Method according to any of the preceding claims, comprising a measuring system (102) positioned in a housing for meteorological measuring instruments, **characterized in that** the measured temperature is linearly extrapolated to a radiation-free level.

6. Method according to any of the preceding claims, **characterized in that** the measurement data and the extrapolation of the temperature measurement values to a radiation-free level is carried out by means of a data processing system.

7. Assembly for carrying out a method according to any of claims 1 to 6, comprising at least one measuring system (102) for temperature measurement having a movably arranged radiation protection screen (103), wherein the movably arranged radiation protection screen (103) is designed to completely or partially shade the measuring system (102),
further comprising a drive device (201) which is designed to move the radiation protection screen (103), wherein the drive device (201) is a motor, and a data processing system which is configured to record measurement data of the measuring system (102) and to carry out an extrapolation of temperature measurement values to a radiation-free level.

8. Assembly according to claim 7, **characterized in that** the drive device (201) is an electric motor.

9. Assembly according to any of claims 7 and 8, **characterized in that** the drive device (201) is a stepper motor.

10. Assembly according to claim 7, **characterized in that** the drive device is a motor having a transmission and causes a periodic movement of the radiation protection screen (103) about the measuring systems (102).

11. Assembly according to claims 7 to 10, **characterized in that** the radiation protection screen (103) has a segmented structure, the segmented regions of the radiation protection screen (103) having a different permeability for the incident radiation.

12. Assembly according to any of claims 7 to 11, **characterized in that** the radiation protection screen (103) has a measuring system for its position determination.

13. Assembly according to claim 7, **characterized in that** the assembly has a measuring system (102) for radiation measurement, and the assembly is designed to periodically shade the measuring system (102) for radiation measurement and the measuring system (102) for temperature measurement in a correlated manner.

14. Use of an assembly according to claim 7 for carrying out the method according to claim 1.

15. Use of a data carrier on which a computer program product is stored, which comprises instructions which cause the device of claim 7 to carry out the method steps according to claim 1, for carrying out the method according to claim 1.

## Revendications

1. Procédé permettant de corriger le rayonnement de mesures de températures météorologiques, comportant au moins un système de mesure (102) pour la mesure de la température et au moins un écran de protection contre les rayonnements (103) monté de manière à pouvoir être déplacé, comprenant les étapes suivantes :
a. mesure de la température lors de l'influence maximale du rayonnement sur le système de mesure (102) pour la mesure de la température sur une période prédéfinie,
b. modification de l'influence du rayonnement sur le système de mesure (102) pour la mesure de la température par ombrage, en tenant compte de l'inertie du système de mesure (102) pour la mesure de la température,
c. mesure de la température lors de l'influence minimisée du rayonnement sur le système de mesure (102) pour la mesure de la température sur une période prédéfinie
d. corrélation entre la modification de la température et le degré d'ombrage et
e. extrapolation de la température mesurée à un niveau sans rayonnement.

2. Procédé selon la revendication 1, **caractérisé en ce que** la modification de l'influence du rayonnement sur le système de mesure (102) pour la mesure de la température est réalisée par un ombrage périodique, au moins partiel, du système de mesure (102) pour la mesure de la température au moyen de l'écran de protection contre les rayonnements (103).

3. Procédé selon l'une des revendications précédentes,
**caractérisé en ce que** l'écran de protection contre les rayonnements (103) monté de manière à pouvoir être déplacé est déplacé périodiquement au moyen d'un dispositif d'entraînement (201).

4. Procédé selon la revendication 3, **caractérisé en ce que** le déplacement périodique de l'écran de protection contre les rayonnements (103) est un déplacement pendulaire ou une rotation autour des systèmes de mesure (102), dans lequel les systèmes de mesure (102) sont placés à proximité dans l'espace ou sur l'axe de rotation dudit déplacement.

5. Procédé selon l'une des revendications précédentes, comportant un système de mesure (102) positionné dans un boîtier pour des instruments de mesure météorologiques, **caractérisé en ce que** la température mesurée est extrapolée linéairement à un niveau sans rayonnement.

6. Procédé selon l'une des revendications précédentes,
**caractérisé en ce que** l'enregistrement des données de mesure et l'extrapolation des valeurs de mesure de température sont effectués à un niveau sans rayonnement au moyen d'une installation de traitement de données.

7. Agencement pour la mise en oeuvre d'un procédé selon l'une des revendications 1 à 6, présentant au moins un système de mesure (102) pour la mesure de la température comportant un écran de protection contre les rayonnements (103) disposé de manière à pouvoir être déplacé, dans lequel l'écran de protection contre les rayonnements (103) disposé de manière à pouvoir être déplacé est conçu pour ombrager entièrement ou partiellement le système de mesure (102),
présentant en outre un dispositif d'entraînement (201) qui est conçu pour déplacer l'écran de protection contre les rayonnements (103), dans lequel le dispositif d'entraînement (201) est un moteur, et une installation de traitement de données qui est configurée pour enregistrer des données de mesure du système de mesure (102) et pour mettre en oeuvre une extrapolation de valeurs de mesure de température à un niveau sans rayonnement.

8. Agencement selon la revendication 7, **caractérisé en ce que** le dispositif d'entraînement (201) est un moteur électrique.

9. Agencement selon l'une des revendications 7 et 8, **caractérisé en ce que** le dispositif d'entraînement (201) est un moteur pas à pas.

10. Agencement selon la revendication 7, **caractérisé en ce que** le dispositif d'entraînement est un moteur comportant un engrenage et provoque un déplacement périodique de l'écran de protection contre les rayonnements (103) autour des systèmes de mesure (102).

11. Agencement selon l'une des revendications 7 à 10,
**caractérisé en ce que** l'écran de protection contre les rayonnements (103) est construit de manière segmentée, dans lequel les zones segmentées de l'écran de protection contre les rayonnements (103) présentent une transparence différente pour le rayonnement incident.

12. Agencement selon l'une des revendications 7 à 11,
**caractérisé en ce que** l'écran de protection contre les rayonnements (103) présente un système de mesure pour sa détermination de position.

13. Agencement selon la revendication 7, **caractérisé en ce que** l'agencement présente un système de mesure (102) pour la mesure du rayonnement et l'agencement est conçu pour ombrager périodiquement et de manière corrélée le système de mesure (102) pour la mesure du rayonnement et le système de mesure (102) pour la mesure de la température.

14. Utilisation d'un agencement selon la revendication 7 pour la mise en oeuvre du procédé selon la revendication 1.

15. Utilisation d'un support de données sur lequel est stocké un produit programme informatique qui comprend des instructions qui amènent le dispositif de la revendication 7 à exécuter les étapes de procédé selon la revendication 1, pour l'exécution du procédé selon la revendication 1.
